## Europäisches Patentamt
## European Patent Office
## Office européen des brevets

(19)

(11) Numéro de publication: **0 274 283**
**B1**

(12)

# FASCICULE DE BREVET EUROPEEN

(45) Date de publication du fascicule du brevet:
24.05.89

(51) Int. Cl.⁴: **C01B 33/02,** C30B 13/22,
C30B 13/06

(21) Numéro de dépôt: 87400022.7

(22) Date de dépôt: 08.01.87

(54) **Procédé de purification sous plasma de silicium divisé.**

(43) Date de publication de la demande:
13.07.88 Bulletin 88/28

(45) Mention de la délivrance du brevet:
24.05.89 Bulletin 89/21

(84) Etats contractants désignés:
**BE DE GB IT NL SE**

(56) Documents cités:
EP-A- 0 045 689
DE-A- 2 924 584
FR-A- 1 374 335
FR-A- 2 438 499
US-A- 4 379 777

(73) Titulaire: **RHONE-POULENC CHIMIE, 25, quai Paul
Doumer, F-92408 Courbevoie Cédex(FR)**

(72) Inventeur: **Amouroux, Jacques, Ecole Nationale
Supérieure de Chimie de Paris, 11, rue Pierre et Curie
F-75005 Paris(FR)**
Inventeur: **Morvan, Daniel, Ecole Nationale Supérieure
de Chimie de Paris, 11, rue Pierre et Curie
F-75005 Paris(FR)**

(74) Mandataire: **Esson, Jean-Pierre et al, Rhône-Poulenc
Interservices Service Brevets Chimie 25, quai Paul
Doumer, F-92408 Courbevoie Cedex(FR)**

## Description

La présente invention concerne un procédé de purification sous plasma de silicium divisé, permettant d'obtenir du silicium massif à la pureté requise pour les applications photovoltaïques ou électroniques.

Pour que le silicium soit utilisable pour constituer des cellules photovoltaïques, sa teneur en divers éléments doit être inférieure à des seuils très bas en accord avec les normes. En particulier, la teneur en éléments qualifiés de "tueurs" d'électrons (V, Cr, Ti, Zr, Na par exemple) doit être inférieure à 50ppb. La teneur en éléments neutres (notamment Fe, Ni, Mg, C, Mn) ne doit pas dépasser 1ppm environ. Enfin, la teneur en éléments dopants, parmi lesquels le bore, l'aluminium, le phosphore et l'arsenic sont majoritaires, doit être contrôlée à une valeur extrêmement faible de sorte que le silicium obtenu soit de type p ou n. Pour que le silicium soit utilisable dans le domaine électronique, la teneur des impuretés dopantes doit être inférieure à 10ppb/

Il est connu, selon la demande de brevet français n° 2 438 499, de purifier du silicium massif sous forme de lingot par fusion de zone sous un plasma obtenu par excitation haute fréquence d'un mélange d'argon et d'hydrogène.

On connaît également, d'après la demande de brevet européen n° 45 689, un procédé de purification d'un lingot de silicium par fusion de zone sous un plasma constitué d'un mélange argon, oxygène et éventuellement hydrogène.

En plus on connaît d'après la demande de brevet US-A 4 379 777 un procédé de purification de silicium à l'état divisé, selon lequel la purification d'une poudre de silicium est effectuée en éliminant des impuretés superficielles par attaque à l'acide, puis en passant la poudre dans un plasma constitué d'un mélange d'argon et d'hydrogène pendant un temps de séjour extrêmement court pour obtenir une poudre dont les particules ont été fondues. La poudre est ensuite traitée encore une fois avec de l'acide pour éliminer les impuretés migrées à la surface des particules pendant la fusion.

Le problème que vise à résoudre la présente invention est de procurer un procédé de purification sous plasma de silicium à l'état divisé. Il s'avère que, si l'on essaye d'appliquer à du silicium divisé les procédés décrits dans les demandes de brevet citées ci-dessus, il est impossible d'obtenir la purification désirée.

La demanderesse a maintenant trouvé, et c'est un des buts de la présente invention, un procédé qui permet de purifier sous plasma du silicium à l'état divisé afin de le rendre utilisable dans les applications photovoltaïques ou électroniques.

La présente invention permet, en outre, la production de silicium massif très pur à partir de silicium divisé, ce qui le rend particulièrement intéressant pour valoriser du silicium divisé impur, peu coûteux, ou pour valoriser du silicium généralement perdu : production de poudre hors spécifications, copeaux provenant du sciage des barreaux en tranches, etc..

Un autre avantage du procédé de l'invention est qu'il permet d'éliminer les matériaux tels que le graphite ou les laitiers de protection placés au contact de la paroi qui sont habituellement utilisés pour fabriquer la paroi du creuset ou isoler la poudre de silicium du creuset.

La présente invention concerne, en effet, un procédé de purification de silicium divisé par fusion dudit silicium, sous un plasma chaud obtenu par excitation haute fréquence de gaz plasmagène caractérisé en ce que, dans une première étape, on réalise la fusion du silicium divisé, le gaz plasmagène étant constitué d'un mélange de 1 à 100% d'hydrogène et de 99% à 0% d'argon et en ce que, dans une deuxième étape, le silicium fondu provenant de la première étape est traité par un plasma dont le gaz plasmagène est constitué d'un mélange d'argon, d'hydrogène et d'oxygène, la proportion d'oxygène dans le mélange étant comprise entre 0,005% et 0,05% et celle d'hydrogène entre 1 et 99,995%.

Selon le procédé de l'invention, le silicium est mis en oeuvre sous forme divisée en poudre, granulés, copeaux, etc...

Lorsque le silicium est mis en oeuvre sous forme de poudre, la granulométrie de celle-ci est généralement telle que le diamètre moyen des particules varie entre 40 microns et 1mm. Par ailleurs, la mise en oeuvre d'une poudre conforme à celle décrite dans le brevet européen n° 0100 268 au nom de la demanderesse peut être avantageusement envisagé selon le procédé de l'invention. Le procédé peut être utilisé pour du silicium de qualité métallurgique, mais il prend davantage d'intérêt lorsque le silicium a déjà un certain degré de pureté et qu'il doit être purifié pour le rendre directement utilisable dans les applications photovoltaïques ou électroniques.

Selon l'invention, on réalise la fusion du silicium divisé à l'aide d'un plasma chaud obtenu par excitation haute fréquence de gaz plasmagène, le plasma lui-même est avantageusement généré par induction afin d'éviter les risques de pollution liés à la mise en oeuvre d'un plasma d'arc.

Selon la première étape du procédé de l'invention, on réalise la fusion du silicium divisé sous un plasma dont le gaz plasmagène est constitué d'un mélange de 1 à 100% d'hydrogène et de 99% à 0% d'argon.

La puissance du plasma mise en oeuvre est adaptée en fonction de la quantité de poudre traitée, de sa pureté et de la composition du gaz plasmagène. A titre d'exemple, elle peut varier de 5kWh à 25kWh par kg de silicium traité.

Selon un mode de mise en oeuvre particulièrement préféré de l'invention, la fusion du silicium divisé est réalisée localement en conservant une épaisseur de silicium non fondu au contact du creuset. Cette pellicule de silicium divisé conduit mal la chaleur; elle diminue donc les pertes calorifiques et empêche la diffusion des impuretés provenant des parois de creuset dans le silicium fondu en évitant une réaction avec la surface du creuset. L'épaisseur de cette pellucle de silicium divisé non fondue est généralement comprise entre 1mm et 20mm.

Le volume de silicium fondu est adapté à la géométrie du creuset utilisé.

Selon la deuxième étape du procédé de l'invention, le silicium fondu provenant de la première étape est traité par un plasma dont le gaz plasmagène est constitué d'un mélange d'argon, d'hydrogène et d'oxygène, la proportion d'oxygène dans le mélange étant comprise enter 0,005% et 0,05% et celle d'hydrogène entre 1 et 99,995%.

La teneur en oxygène indiquée est critique selon l'invention. En-dessous de la teneur minimale, la purification dans les éléments que l'on désire extraire est insuffisante. Au-dessus de la teneur maximale, on ne peut plus obtenir la purification désirée ; en outre, l'élimination complémentaire des composés du bore que l'on peut réaliser subséquemment par attaque à l'acide selon une technique bien connue de l'homme de métier s'avère non économique en raison des quantités trop importantes d'acide à mettre en oeuvre dans ce cas.

Le procédé de l'invention peut être réalisé à pression atmosphérique ou à une pression légèrement inférieure ou supérieure; par ailleurs, l'atmosphère au contact du silicium doit être la même que celle du plasma.

Le procédé selon l'invention peut être mis en oeuvre dans les dispositifs décrits dans l'état de la technique et en particulier dans les dispositifs décrits dans les demandes de brevets citées dans la présente demande c'est-à-dire la damande EP-A-0045 689 et la demande FR-A-24 384 999, documents qui sont incorporés à la présente description et dont on reprend ci-après les principaux éléments.

Ce dispositif comporte une enceinte de forme cylindrique à axe horizontal, fermée par des fonds étanches percés d'ouvertures de passage de tiges supportant un creuset destiné à recevoir le silicium devisé à purifier. Un mécanisme, schématisé par un moteur et une liaison vise-écrou, permet de déplacer la nacelle parallèlement à l'axe de l'enceinte. Cette dernière porte, à sa partie supérieure, un raccord sur lequel est monté de façon étanche un tube en matériau isolant, par exemple en quartz, destiné à la formation du plasma. Ce tube reçoit, à sa partie supérieure, un mélange des gaz plasmogènes dont l'oxygène. Le dispositif d'amenée comporte une chambre de mélange dans laquelle débouchent une conduite d'amenée des gaz plasmogènes (argon et/ou hydrogène purifiés) munie d'une vanne de réglage, et une conduite d'amenée d'oxygène, munie d'une vanne de fuite contrôlée permettant de régler le débit d'oxygène à un niveau très faible et précis. Les débits des gaz plasmogènes sont réglés de façon connue de l'homme de métier, en fonction des caractéristiques technologiques de l'appareillage.

Le champ haute fréquence de création du plasma est produit par un enroulement bobiné autour du tube et alimenté par un générateur à haute fréquence de puissance suffisante.

L'enceinte peut encore comporter un rapport permettant de relier l'enceinte à une pompe à vide, afin de purger l'enceinte ou d'améliorer la circulation de gaz à une pression voisine de la pression atmosphérique.

La mise en oeuvre du procédé dans le dispositif montré en figure s'effectue suivant un processus classique. Le silicium divisé est disposé dans le creuset. Les moyens de pompage sont mis en marche pour vider l'enceinte de l'air qu'elle contient. Le tube est ensuite mis en communication avec la ou les sources de gaz plasmagènes, avec un débit convenable pour obtenir, dans l'enceinte, une pression appropriée. La source haute fréquence est mise en route avec une puissance permettant de créer, par induction haute fréquence, un plasma à l'intérieur du tube. Par l'effet du pompage des gaz, un jet de plasma se forme qui est dirigé sur le creuset. Celui-ci est, en début de traitement, situé dans la partie gauche de l'installation. Lorsque la fusion de la zone du silicium divisé désirée est obtenue, c'est-à-dire en laissant une pellicule de silicium divisé non fondue au contact du creuset, l'oxygène est mis en communication avec les autres gaz plasmagènes.

Le creuset se déplace vers la droite. La zone fondue, située initialement à droite de la nacelle, progresse lentement vers l'extrémité gauche de celle-ci laissant derrière elle une zone purifiée.

A la fin du traitement, les impuretés se retrouvent à l'extrémité gauche du lingot obtenu et elles peuvent être éliminées par séparation de cette extrémité, comme dans les procédés classiques de fusion de zone.

Sans sortir du cadre de l'invention, il est possible, si on le désire, d'effectuer plusieurs passages du plasma dans chaque étape sur la zone fondue. En outre, du fait que le silicium fondu occupe un volume inférieur au silicium divisé, il est possible d'effectuer plusieurs opérations selon le procédé de l'invention en remplissant à nouveau le creuset avec du silicium divisé après chaque opération.

Le procédé de l'invention permet aussi d'obtenir du silicium massif à la pureté requise pour les applications photovoltaïques ou électroniques.

Les exemples ci-après illustrent l'invention sans en limiter la portée.

## EXEMPLE 1

On utilise le dispositif décrit dans la demande de brevet européen n° 45 689.

La puissance du plasma utilisé est de 7kWh.

On place dans un creuset (de 2,5cm de diamètre et de 15mm de hauteur) 50g d'une poudre de silicium

3

dont le diamètre moyen est de 50 microns et dont la concentration dans les différentes "impuretés" est donnée dans le tableau 1 ci-après.

On réalise la fusion de la poudre pas passage du creuset sous la torche à plasma dont la composition du gaz plasmagène est : 99% d'argon et 1% d'hydrogène, la vitesse de déplacement du creuset par rapport à la torche est fixée à 60cm/h. Le débit d'argon est fixé dans le dispositif à 30 l/mn et l'hydrogène à 0.3, l/mn. La fusion est réalisée de telle façon que l'on maintient une pellicule de silicium non fondu d'environ 2mm au contact du creuset.

Le silicium divisé étant fondu, on change la composition du gaz plasmagène en introduisant dans celui-ici 0,03% d'oxygène. On a opéré les deux étapes à la pression atmosphérique.

Par ailleurs, l'atmosphere au contact du silicium était la même que celle du plasma utilisé. On obtient du barreau massif de 50g de silicium purifié.

Le tableau 1 ci-après indique la purification obtenue sur trois échantillons de poudre différents, l'analyse des échantillons ayant été faite par spectrométrie d'émission plasma.

| N° échantillon de poudre | Eléments dosés | Teneur dans la poudre de départ en ppm par rapport au poids de silicium | Teneur dans le barreau obtenu après purification en ppm par rapport au poids de silicium |
|---|---|---|---|
| 1 | Al | 19,2 | 4,5 |
|  | Fe | 97 | 0,95 |
|  | Ti | 6,8 | ≤0,3 |
|  | Ca | 25 | 1,5 |
|  | P | 22 | 7,9 |
|  | B | 15 | 3,9 |
| 2 | Al | 124 | 1,3 |
|  | Fe | 121 | 0,45 |
|  | Ti | 3,5 | ≤0,2 |
|  | Ca | 15 | 1,2 |
|  | P | 28 | 5,1 |
|  | B | 20 | 5,7 |
| 3 | Al | 48 | 21 |
|  | Fe | 95 | 1,1 |
|  | Ti | 0,5 | 0,2 |
|  | Ca | 9,3 | 1,7 |
|  | P | ≤0,5 | ≤0,5 |
|  | B | 0,11 | 0,08 |

## EXEMPLE 2 - COMPARATIF

On opère dans le même dispositif que selon l'exemple 1 avec la même poudre de départ, en mettant en oeuvre directement un gaz plasmagène de composition suivante : 99% d'argon , 1% d'hydrogène et 0,03% d'oxygène. Cette procédure conduit à un matériaux qui reste pulvérulant et qu'il est impossible de purifier quelle que soit la durée de contact avec le plasma.

**Revendications**

1) Procédé de purification de silicium devisé par fusion dudit silicium, sous un plasma chaud obtenu par excitation haute fréquence de gaz plasmagène caractérisé en ce que, dans une première étape, on réalise la fusion du silicium divisé, le gaz plasmagène étant constitué d'un mélange de 1 à 100% d'hydrogène et de 99% à 0% d'argon et en ce que, dans une deuxième étape, le silicium fondu provenant de la première étape est traité par un plasma dont le gaz plasmagène est constitué d'un mélange d'argon, d'hydrogène et d'oxygène, la proportion d'oxygène dans le mélange étant comprise entre 0,005% et 0,05% et celle d'hydrogène entre 1 et 99,995%.

2) Procédé selon la revendication 1 caractérisé en ce que la fusion du silicium divisé est réalisée localement en conservant une épaisseur de silicium non fondu au contact du creuset afin que les pertes calorifiques soient diminuées et la diffusion des impuretés provenant des parois du creuset dans le silicium fondu soit empêchée.

3) Procédé selon la revendication 2 caractérisé en ce que l'épaisseur de cette pellicule de silicium divisé non fondue est généralement comprise entre 1mm et 20mm.

4) Procédé selon la revendication 1 caractérisé en ce qu'il est réalisé à pression atmosphérique ou à une pression légèrement inférieure ou supérieure.

## Claims

1. Process for purifying divided silicon by melting the said silicon under a hot plasma obtained by highfrequency excitation of plasma-forming gas, characterized in that, in a first stage, melting of the divided silicon is produced, the plasma-forming gas consisting of a mixture of 1 to 100% hydrogen and of 99% to 0% of argon, and in that, in a second stage, the molten silicon originating from the first stage is treated with a plasma whose plasma-forming gas consists of a mixture of argon, hydrogen and oxygen, the proportion of oxygen in the mixture being between 0.005% and 0.05% and that of hydrogen between 1 and 99.995%.

2. Process according to Claim 1, characterized in that the melting of the divided silicon is produced locally whilst maintaining a thickness of unmelted silicon in contact with the crucible walls in order that the heat losses may be reduced and the diffusion of the impurities originating from the crucible walls into the molten silicon may be prevented.

3. Process according to Claim 2, characterized in that the thickness of this unmelted film of divided silicon is generally between 1 mm and 20 mm.

4. Process according to Claim 1, characterized in that it is performed at atmospheric pressure or at a pressure which is slightly lower or higher.

## Patentansprüche

1. Verfahren zur Reinigung von zerkleinertem Silicium durch Schmelzen des Siliciums unter einem heißen Plasma, das durch Hochfrequenzerregung von Plasma erzeugendem Gas erhalten wird, dadurch gekennzeichnet, daß man in einem ersten Schritt das Schmelzen des zerkleinerten Siliciums bewirkt, wobei das Plasma erzeugende Gas aus einem Gemisch von 1 bis 100% Wasserstoff und 99 bis 0% Argon besteht, und daß man in einem zweiten Schritt das im ersten Schritt erhaltene geschmolzene Silicium mit einem Plasma behandelt, dessen Plasma erzeugendes Gas aus einem Gemisch von Argon, Wasserstoff und Sauerstoff besteht, wobei der Anteil an Sauerstoff in dem Gemisch zwischen 0,005% und 0,05% liegt und derjenige des Wasserstoffs zwischen 1 und 99,995% liegt.

2. Verfahren gemäß Anspruch 1, dadurch gekennzeichnet, daß das Schmelzen des zerkleinerten Siliciums lokal erfolgt unter Bewahrung einer Schichtdicke an ungeschmolzenem Silicium, die mit dem Tiegel in Kontakt steht, um die Wärmeverluste zu verringern und die Diffusion von Verunreinigungen aus den Wänden des Tiegels in das geschmolzene Silicium zu verhindern.

3. Verfahren nach Anspruch 2, dadurch gekennzeichnet, daß die Schichtdicke des ungeschmolzenen zerkleinerten Siliciums allgemein zwischen 1 mm und 20 mm beträgt.

4. Verfahren nach Anspruch 1, dadurch gekennzeichnet, daß es bei atmosphärischem Druck durchgeführt wird oder einem Druck, der geringfügig darunter oder darüber liegt.